# EUROPEAN PATENT APPLICATION

(11) **EP 1 761 089 A1**
(43) Date of publication of application: **07.03.2007**
(21) Application number: 06018450.4
(22) Date of filing: 04.09.2006
(51) Int. Cl.: H04Q 7/32

(54) **Network selection for a multimode terminal**

(30) Priority: 05.09.2005 KR 20050082323
(71) Applicant: LG Electronics Inc., Yongdungpo-Gu Seoul 150-010 (KR)
(72) Inventor: Park, Seong-Jin, Manan-Gu Anyang Gyeonggi-Do (KR)
(74) Representative: Katérle, Axel

(57) **Abstract**

A mobile communication terminal for supporting wireless data service and a method thereof. A mobile communication terminal for supporting wireless data services, comprises: a memory for storing information for at least one wireless data network and a preset priority for the wireless data networks; a controller for sequentially selecting the wireless data networks according to the preset priority; and modules for connecting to servers corresponding to the selected wireless data networks.

## Description

### BACKGROUND THE INVENTION

### 1. Field of the Invention

The present invention relates to a mobile communication terminal, and more particularly, to a mobile communication terminal for supporting wireless data services capable of selecting an optimum wireless data network by considering various wireless environment conditions.

### 2. Description of the Background Art

A mobile communication terminal allows communication to be performed with other parties via wireless calling or allows users to gain wireless access almost anywhere and anytime. A mobile switching center (MSC) provides the necessary control functions while the mobile terminal moves within service areas managed by base stations (BS). As mobile communication techniques continue to develop, high speed wireless data services are being provided throughout the world.

The mobile communication terminal can receive and handle wireless data services through a wireless data network, such as a code division multiple access (CDMA) network, a global system for mobile communications (GSM) network, a wireless local area network (WLAN), a wireless broadband (WiBro) network, a worldwide interoperability for micro-wave access (WiMAX) network, etc.

The mobile communication terminal can receive various on-line contents through Internet access via wireless data networks, such as, mobile banking functions allowing users to conduct financial transactions (e.g., depositing and withdrawing funds), on-line game functions allowing user to play video games, mobile cinema functions allowing users to watch movies, videos, broadcasts and the like in real-time, etc. To this end, various products provided with features and advantages of a portable communication device, a PDA, a notebook, etc. are being developed. Various protocols are applied to the mobile communication terminal in order to implement various applications such as a web browsing, etc.

Since the mobile communication terminal may simultaneously support various networks and systems (i.e., CDMA, WLAN, GSM, etc.), a user can select his desired wireless data network and gains access to wireless data services through the selected wireless data network.

However, in the related art mobile communication terminal for supporting wireless data services, the user directly selects a desired wireless data network corresponding to the wireless data service to be received. Therefore, a wireless data service is provided through the selected wireless data network regardless of the particular functions of the wireless data network.

### BRIEF DESCRIPTION OF THE INVENTION

An important aspect of the present invention is that the present inventors recognized certain drawbacks of the related art, as mentioned above. As a result, the present inventors provided a solution to such drawbacks, as follows.

An object of the present invention is to provide a mobile communication terminal for supporting wireless data service capable of providing a wireless data service by selecting an optimum wireless data network with consideration of a wireless environment by attempting to sequentially connect to at least one wireless data network according to a preset priority, and a method thereof.

To achieve these and other advantages and in accordance with the purpose of the present invention, as embodied and broadly described herein, there is provided a mobile communication terminal for supporting wireless data service, comprising: a memory for storing information for at least one wireless data network and a preset priority for the wireless data networks; a controller for sequentially selecting the wireless data networks according to the preset priority; and modules for connecting to servers corresponding to the selected wireless data networks.

To achieve these and other advantages and in accordance with the purpose of the present invention, as embodied and broadly described herein, there is also provided a method for supporting wireless data service for a mobile communication terminal, comprising: storing information for at least one wireless data network and a preset priority of the wireless data networks; sequentially selecting the wireless data networks according to the preset priority; and attempting to connect to servers corresponding to the selected wireless data networks by modules.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a construction view of a mobile communication terminal for supporting wireless data service according to the present invention;
FIG. 2 is a flowchart showing a method for supporting wireless data service according to a first embodiment of the present invention; and
FIG. 3 is a flowchart showing a method for supporting wireless data service according to a second embodiment of the present invention.

### DETAILED DESCRIPTION OF THE INVENTION

Reference will now be made in detail to some non-limiting exemplary embodiments of the present invention, examples of which are illustrated in the accompanying drawings.

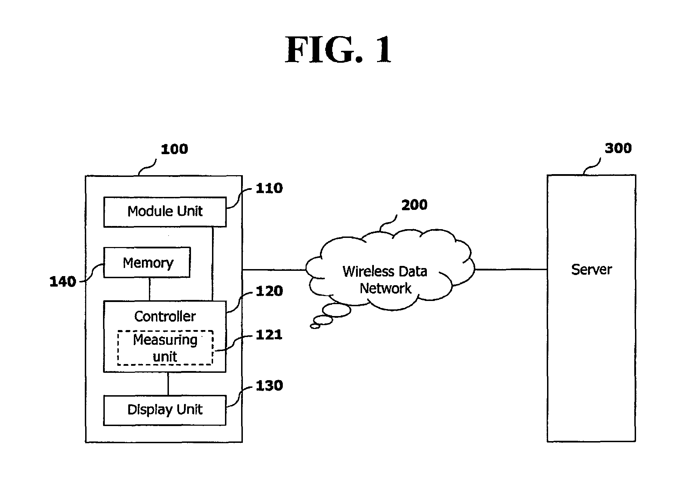

Referring to FIGS. 1 to 3, a mobile communication terminal for supporting wireless data service capable of providing a wireless data service by selecting an optimum wireless data network with consideration of a wireless environment by attempting to sequentially connect to at least one wireless data network according to a preset priority, and a method thereof according to the present invention will be explained.

In the present invention, wireless data networks such as a code division multiple access (CDMA) system, a global system for mobile communications (GSM) system, a wireless local area network (WLAN) system, a wireless broadband (WiBro) system, a worldwide interoperability for micro-wave access (WiMAX) system, etc. can be handled and supported by one mobile communication terminal. Accordingly, a particular wireless data network that may be most optimum for a particular wireless data service can be selected by checking functions of the various wireless data networks that can be supported.

FIG. 1 shows an exemplary structure of a mobile communication terminal for supporting wireless data service according to the present invention.

As shown, the mobile communication terminal for supporting wireless data service according to the present invention may comprise a memory 140 for storing information for at least one wireless data network and a preset priority for the wireless data networks; a display unit 130 for displaying the wireless data networks according to the determined priority; a controller 120 for sequentially selecting the wireless data networks according to the preset priority; and a module unit 110 for connecting to servers corresponding to the selected wireless data networks.

The mobile communication terminal 100 implemented with the modules, the controller, and the display unit transmits or receives data to and from the servers 300 through the wireless data networks 200, thereby checking each function of the wireless data networks 200 based on the transmitted and received data.

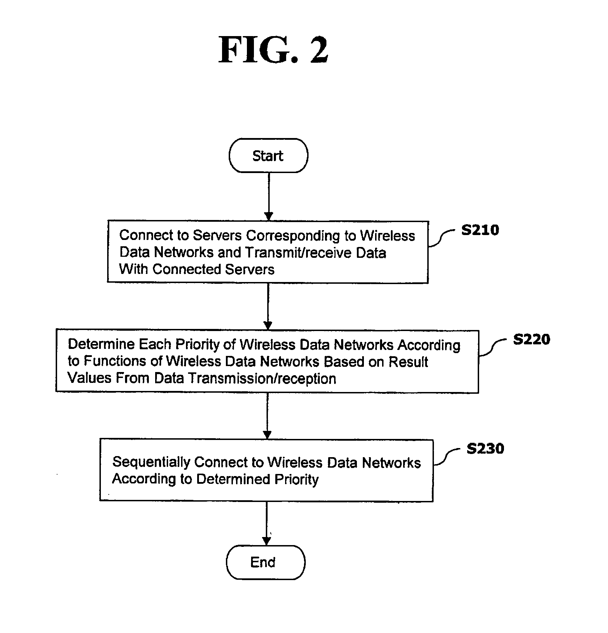

The mobile communication terminal 100 may determine a priority of the wireless data network based on various types of criteria. For example, a quality of service (QoS), a usage charge of the wireless data network 200, etc. Hereinafter, a method for supporting wireless data service in which a priority of a wireless data network is determined based upon a quality of service of the wireless data network according to a first embodiment of the present invention will be explained with reference to FIG. 2. However, this is merely for the sake of explanation, and it can be understood that the features of the present invention may be based upon other types of criteria.

FIG. 2 is a flowchart showing an exemplary method for supporting wireless data services according to a first embodiment of the present invention.

As shown, an exemplary method for supporting wireless data service for a mobile communication terminal may comprise, determining a priority of at least one wireless data network according to each function of the wireless data networks (S210), sequentially selecting the wireless data networks according to the determined priority (S220), and attempting to connect to servers corresponding to the selected wireless data networks (S230).

Each function of the wireless data networks is determined based upon each quality of service (QoS) of the wireless data networks. Preferably, the QoS is determined based on at least one of the following factors: a radio signal strength indicator (RSSI), a signal interference noise ratio (SINR), and an energy of carrier/interference of other network elements (Ec/Io). Here, it can be understood that other factors may be considered when determining the QoS.

An exemplary method for connecting to wireless data networks according to a first embodiment of the present invention will be explained as follows.

The mobile communication terminal 100 should be provided with a module unit 110 (or similar functional entity) having modules (i.e., hardware, software, or a combination thereof with codes and/or protocols that can be executed by a processor or the like) for supporting wireless data networks (such as CDMA, GSM, WLAN, WiBro, WiMAX, etc. systems) for handling wireless data services. Here, the module unit 110 may be implemented as a hardware modem or a software modem.

The mobile communication terminal 100 periodically connects to the servers 300 corresponding to the wireless data networks 200 through the module unit 110, and transmits or receives data to/from the connected servers 200.

Then, the mobile communication terminal 100 checks each quality of service (QoS) of the wireless data networks 200 based on result values from the data transmission and reception, and stores the check result in the memory 140. That is, the controller 120 checks each function of the wireless data networks 200 by measuring certain factors, such as, the RSSI, the SINR, and the Ec/Ic mentioned above. Herein, the controller 120 can be additionally provided with a measuring unit 121 for measuring the quality of services (QoS) of the wireless data networks 200 therein.

According to the stored functions of the wireless data networks 200, the controller 120 determines each priority of the wireless data networks 200 (S210). Then, the controller 120 outputs the wireless data networks 200 on the display unit 130 (or other output means) according to the determined priorities, thereby informing the types of available wireless data networks to the user.

The controller 120 stores the types of wireless data networks 200 that may be supported and the determined priorities in the memory 140, thereby managing functions of the wireless data networks 200.

The mobile communication terminal 100 sequentially selects said at least one wireless data network according to the determined priority (S220), and then connects to servers corresponding to the selected wireless data networks (S230), which will be explained as follows.

For the sake of explanation, it is assumed that the order or determined priorities of the networks (systems) to which the mobile communication terminal 100 can be connected to is CDMA, WLAN, and WiBro. Other networks (systems) and priorities may be employed as needed.

Under this assumption, the mobile communication terminal 100 is firstly connected to the CDMA. That is, the mobile communication terminal 100 first attempts to perform a wireless data service through the CDMA upon connecting to the CDMA network. However, if the mobile communication terminal 100 fails to be properly connected to the CDMA network, a re-connection attempt to the CDMA network is performed a certain number of times. Preferably, three re-connection attempts are made. Alternatively, a time-out period or other duration may be provided during which a number of connection attempts can be made.

If the mobile communication terminal 100 fails to connect with the CDMA network, the mobile communication terminal 100 then attempts a connection with a different type of network according to the determined priorities. Namely, an attempt to connect with the WLAN is made. That is, the mobile communication terminal 100 attempts to perform the desired wireless data service through the WLAN. However, if the mobile communication terminal 100 cannot initially be connected to the WLAN, a re-connection attempt to the WLAN is performed a certain number of times. Alternatively, a time-out period or other duration may be provided during which a number of connection attempts can be made.

If the mobile communication terminal 100 fails to be connected to the WLAN, the mobile communication terminal 100 then attempts a connection with a different type of network according to the determined priorities. Namely, an attempt to connect with the WiBro network is made. That is, the mobile communication terminal 100 attempts to perform the desired wireless data service through the WiBro network. However, if the mobile communication terminal 100 fails to be connected to the WiBro network, a re-connection attempt to the WiBro network is performed a certain number of times. Alternatively, a time-out period or other duration may be provided during which a number of connection attempts can be made.

If the mobile communication terminal 100 fails to be connected to the CDMA network, the WLAN, and the WiBro network, it may inform this situation to the user through the display unit 130 or other output means.

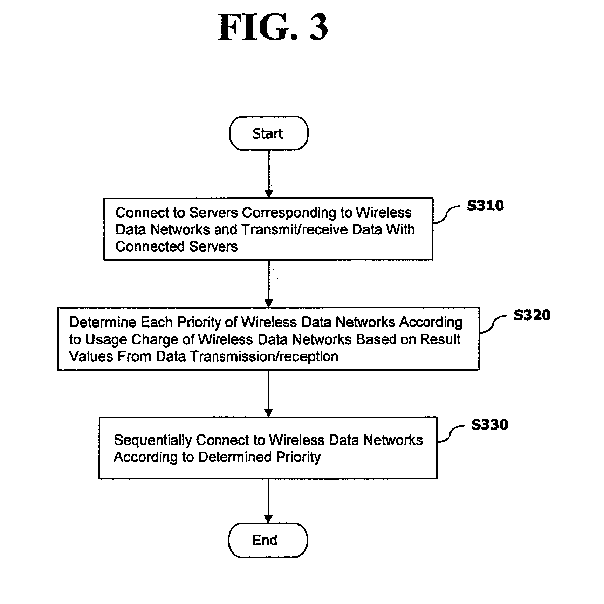

Hereinafter, a method for supporting wireless data service in which each priority of the wireless data networks 200 is determined according to each usage charge information for the wireless data networks 200 according to the second embodiment of the present invention will be explained with reference to FIG. 3. Here, it can be understood that other factors in addition to or besides the usage charge may be considered.

FIG. 3 is a flowchart showing an exemplary method for supporting wireless data services according to a second embodiment of the present invention.

As shown in FIG. 3, an exemplary method for supporting wireless data services for a mobile communication terminal comprises, determining each priority of the wireless data networks based on usage charge information for the wireless data networks (S310), sequentially selecting the wireless data networks according to the determined priority (S320), and attempting to sequentially connect to servers corresponding to the selected wireless data networks (S330).

The mobile communication terminal should be provided with information for various fee charging systems (schemes or mechanisms) for the various wireless data networks in the memory 140. The controller 120 can determine each priority of the wireless data networks 200 according to the stored usage charge information. For instance, the charging system may includes a fixed charging system, a variable charging system according to a usage duration or an area, etc.

A method for connecting the mobile communication terminal to the wireless data networks according to the second embodiment of the present invention is similar to the method for connecting the mobile communication terminal to the wireless data networks according to the first embodiment of the present invention except for a factor for determining each priority of the wireless data networks 200, and thus a detailed description for commonly applicable features will be omitted such that the features of the second embodiment will not be obscured.

That is, whereas the priority of the wireless data networks 200 is determined according to each quality of service (QoS) of the wireless data networks 200 in the first embodiment of the present invention, each priority of the wireless data networks 200 is determined according to each usage charge information for the wireless data networks 200 in the second embodiment of the present invention.

The CDMA network, the WLAN, and the WiBro network were referred to merely to explain certain features of the present invention merely for the sake of convenience. However, the mobile communication terminal can be connected to other wireless data networks that support wireless data services by the aforementioned methods.

The factors for selecting an optimum wireless data network is not limited to the RSSI, the SINR, the Ec/lo, and the usage charge, but can include many other factors, such as a data transmission speed for enhancing a function of the wireless data network or a user's convenience. For example, the user may wish to connect with a network that has the least data congestion in order to quickly receive the desired service despite its relatively higher costs. Alternatively, the user may desire to connect with a network that would incur the least cost despite its relatively slower data connection speed.

Although the user may be provided with options to select a particular wireless data network based upon the priorities, it can be understood that the mobile terminal (or other applicable communication device) may automatically perform the connection attempts without first asking the user to choose a particular type of wireless data network. For example, if the user initial sets certain options to allow connectivity to any network that provides the fastest data connection speed, the mobile terminal can then proceed to scan through all available wireless data networks and attempt a connection to the most appropriate one without requiring user selection each time.

However, as the user enters, leaves, and/or roams between various types of wireless data networks, the mobile terminal may prompt the user to see if connectivity to a different type of network would be desirable, whether the priority settings should be changed, or the like. Alternatively, connection attempts to the most "appropriate" wireless data networks may be "automatically scanned and performed based upon initial user settings and criteria.

As aforementioned, in the mobile communication terminal for supporting wireless data services, an optimum wireless data network upon considering the wireless environment and/or conditions can be selected by attempting to sequentially connect to at least one wireless data network according to a preset priority of the wireless data networks.

To implement the various features described above, the present invention can employ various types of hardware and/or software components (modules). For example, different hardware modules may contain various circuits and components necessary to perform the steps of the above method. Also, different software modules (executed by processors and/or other hardware) may contain various codes and protocols necessary to perform the steps of the present invention method.

The present invention also provides a mobile communication terminal comprising: a module unit adapted to support multiple wireless networks; a controller adapted to measure certain factors of each wireless network to determine a priority for each wireless network; and a memory adapted to store the measured certain factors and the determined priority of each wireless network, wherein the controller, the module unit, and the memory cooperate to either select a highest priority wireless network and attempt a connection thereto or sequentially select each wireless network according to the order of their priorities and sequentially attempt a connection thereto.

Here, the module unit periodically connects to a server of each wireless network. The certain factors measured by the controller comprises at least one of a radio signal strength indicator (RSSI), a signal interference noise ratio (SINR), an energy of a carrier to interference ratio (Ec/lo), a usage charge information, and a data rate. The controller further comprises: a measuring unit adapted to measure the quality of service (QoS) related to each wireless data network. The sequential connection attempts to each wireless network performed by cooperation of the controller, the module unit, and the memory are limited by a set number of re-connection attempts or limited by a time-out duration. The sequential connection attempts performed by cooperation of the controller, the module unit, and the memory are made in the sequential order of a mobile communications network, a wireless local area network, and a wireless broadband network. The selection of a wireless network and attempting connection thereto performed by cooperation of the controller, the module unit, and the memory are either achieved automatically without user intervention or achieved upon appropriate user selection.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile communication terminal for supporting wireless data services, comprising:
a memory for storing information for at least one wireless data network and a preset priority for the wireless data networks;
a controller for sequentially selecting the wireless data networks according to the preset priority; and
modules for connecting to servers corresponding to the selected wireless data networks.

2. The terminal of claim 1, wherein the wireless data networks comprise a code division multiple access (CDMA) network, a global system for mobile communications (GSM) network, a wireless local area network (WLAN), a wireless broadband (WiBro) network, and a worldwide interoperability for micro-wave access (WiMAX) network.

3. The terminal of claim 1, wherein the modules are implemented as a hardware modem.

4. The terminal of claim 1, wherein the modules are implemented as a software modem.

5. The terminal of claim 1, wherein the controller further comprises a measuring unit for measuring a quality of service for the wireless data network, and the priority is determined according to the quality of service for the wireless data network.

6. The terminal of claim 5, wherein the QoS is at least one of a radio signal strength indicator (RSSI), a signal interference noise ratio (SINR), and an energy of carrier/interference of other terminals (Ec/lo).

7. The terminal of claim 1, wherein the memory stores usage charge information for the wireless data networks, and the priority is determined according to the usage charge information for the wireless data network.

8. The terminal of claim 1, wherein the mobile communication terminal attempts a connection to each wireless data network in sequential order according to the determined priority by a predetermined number of times.

9. A method for supporting wireless data service for a mobile communication terminal, comprising:
storing information for at least one wireless data network and a preset priority of the wireless data networks;
sequentially selecting the wireless data networks according to the preset priority; and
attempting to connect to servers corresponding to the selected wireless data networks.

10. The method of claim 9, wherein the wireless data networks comprise a code division multiple access (CDMA) network, a global system for mobile communications (GSM) network, a wireless local area network (WLAN), a wireless broadband (WiBro) network, and a worldwide interoperability for micro-wave access (WiMAX) network.

11. The method of claim 10, wherein the step of storing information for at least one wireless data network and each preset priority of the wireless data networks comprises:
measuring each quality of service for the wireless data networks;
determining a priority of the wireless data networks according to the measured qualities of service; and
storing information for the wireless data networks and a preset priority of the wireless data networks.

12. The method of claim 11, wherein the QoS is at least one of a radio signal strength indicator (RSSI) and a signal interference noise ratio (SINR), and an energy of carrier/interference of other terminals (Ec/lo).

13. The method of claim 9, wherein the step of storing information for at least one wireless data network and each preset priority of the wireless data networks comprises:
storing usage charge information for the wireless data networks;
determining a priority of the wireless data networks according to the stored usage charge information; and
storing information for the wireless data networks and a preset priority of the wireless data networks.

14. The method of claim 9, in the step of attempting to connect to servers, the mobile communication terminal attempts to sequentially connect to the wireless data networks according to the preset priority by a preset number of times.

15. A mobile communication terminal comprising:
a module unit adapted to support multiple wireless networks;
a controller adapted to measure certain factors of each wireless network to determine a priority for each wireless network; and
a memory adapted to store the measured certain factors and the determined priority of each wireless network,
wherein the controller, the module unit, and the memory cooperate to either select a highest priority wireless network and attempt a connection thereto or sequentially select each wireless network according to the order of their priorities and sequentially attempt a connection thereto.

16. The terminal of claim 15, wherein the module unit periodically connects to a server of each wireless data network.

17. The terminal of claim 16, wherein the certain factors measured by the controller comprises at least one of a radio signal strength indicator (RSSI), a signal interference noise ratio (SINR), an energy of a carrier to interference ratio (Ec/lo), a usage charge information, and a data rate.

18. The terminal of claim 17, wherein the controller further comprises:
a measuring unit adapted to measure the quality of service (QoS) related to each wireless data network.

19. The terminal of claim 18, wherein the sequential connection attempts to each wireless network performed by cooperation of the controller, the module unit, and the memory are limited by a set number of re-connection attempts or limited by a time-out duration.

20. The terminal of claim 19, wherein the sequential connection attempts performed by cooperation of the controller, the module unit, and the memory are made in the sequential order of a mobile communications network, a wireless local area network, and a wireless broadband network.

21. The terminal of claim 20, wherein the selection of a wireless network and attempting connection thereto performed by cooperation of the controller, the module unit, and the memory are either achieved automatically without user intervention or achieved upon appropriate user selection.
